Europäisches Patentamt

European Patent Office

Office européen des brevets

(19)

(11) Veröffentlichungsnummer : **0 127 185**
**B1**

(12) **EUROPÄISCHE PATENTSCHRIFT**

(45) Veröffentlichungstag der Patentschrift :
30.12.86

(51) Int. Cl.⁴ : **F 16 C  1/10, F 16 C  1/20**

(21) Anmeldenummer : **84106192.2**

(22) Anmeldetag : **30.05.84**

(54) **Bowdenzug.**

(30) Priorität : **31.05.83 DE 3319697**

(43) Veröffentlichungstag der Anmeldung :
**05.12.84 Patentblatt 84/49**

(45) Bekanntmachung des Hinweises auf die Patenterteilung : **30.12.86 Patentblatt 86/52**

(84) Benannte Vertragsstaaten :
**AT FR GB IT**

(56) Entgegenhaltungen :
**FR-A- 1 421 347**
**US-A- 3 657 942**
**US-A- 4 112 708**

(73) Patentinhaber : **Paul Stoessel GmbH & Co KG**
**Meerbuscher Strasse 64**
**D-4005 Meerbusch 2-Osterath (DE)**

(72) Erfinder : **Buchholz, Horst**
**Am Nierster Pfad 23**
**D-4005 Meerbusch 3 (DE)**

(74) Vertreter : **Kühnemann, Klaus**
**Sonderburgstrasse 36**
**D-4000 Düsseldorf 11 (DE)**

EP 0 127 185 B1

Jouve, 18, rue St-Denis, 75001 Paris, France

## Beschreibung

Die Erfindung betrifft einen Bowdenzug, bestehend im wesentlichen aus Zugelement und vorzugsweise konzentrisch mehrteilig aufgebautem Mantelelement, wobei zwischen den gegeneinander längsbeweglich gelagerten Elementen eine mehrfache linienförmige Berührung vorgesehen ist. Dabei ist der Ausdruck Zugelement in üblicher Weise so zu verstehen, daß damit sowohl Zug- als auch Druckkräfte zur Durchführung entsprechender Stellvorgänge übertragen werden können.

Ein Bowdenzug der vorstehend genannten Gattung ist durch die Offenlegungsschrift DE-A-30 21 533 bekannt. Diese Veröffentlichung offenbart einen Bowdenzug mit einem Zugdraht, der in einem Kunststoffschlauch geführt ist, welcher seinerseits von einem im wesentlichen von einer Drahtspirale gebildeten Bowdenzugmantel umhüllt ist. Dabei weist der Kunststoffschlauch, also der innere Teil des Mantels, auf seiner inneren und auf seiner äußeren Fläche kleine, im Querschnitt dreieckige Rippen auf, die sich in Längsrichtung des Schlauches erstrecken, und zwar entweder geradlinig achsparallel oder spiralförmig nach Art einer Wendel. Die auf diese Weise innen und außen zwischen den Rippen gebildeten Kammern können mit Schmierfett verfüllt werden. Wesentlich ist, daß die Führungsdurchmesser zwischen Zugdraht und Schlauch einerseits und zwischen Schlauch und Mantel andererseits mit sich überlappenden Toleranzen hergestellt sind, um einen Gleit-Press-Sitz zu schaffen.

Mit der bekannten Bowdenzug-Ausbildung soll erreicht werden, daß der Bowdenzug keine Schwingungen aus einem verbundenen schwingenden System aufnimmt und an ein nichtschwingendes Bauteil weiterleitet. Insbesondere Schwingungen im Motorraum von Kraftfahrzeugen sollen nicht in den Fahrgastraum übertragen werden. Außerdem wird mit dem bekannten Bowdenzug das Ziel verfolgt, eine durch Querspiel verursachte Stellhysterese im Verhältnis zwischen Vor- und Rückbewegung des Zugdrahtes zu beseitigen. Die hierzu vorgeschlagenen Mittel, nämlich der mit beiderseitigen Rippen versehene Innenschlauch des Mantelelementes und dessen feine Dimensionierung, sind jedoch vergleichsweise sehr aufwendig und dürften nur in solchen Anwendungsfällen zu verwirklichen sein, die einen derartigen Aufwand rechtfertigen. Außerdem erscheint es bei dem bekannten Bowdenzug nachteilig, daß zumindest prinzipiell ein drittes längsbewegliches Element, nämlich der gerippte Schlauch, eingeführt wird, dessen Bewegungen von den gewünschten Bewegungen des Zugelementes abweichen und praktisch nicht kontrollierbar sind. Damit können Ungenauigkeiten von Stellvorgängen nicht ausgeschlossen werden.

Es ist ferner aus der US-A-3 657 942 ein Bowdenzug bekannt, dessen Zugelement auf seinem äußeren Umfang verteilt eine Mehrzahl von längsverlaufenden Rippen aufweist, welche bei Bewegungen des Zugelementes innerhalb der Ummantelung die Reibung der aneinander gleitenden Teile vermindern sollen. Wegen der Mehrzahl der linienförmigen Berührungen zwischen Zugelement und Ummantelung ist jedoch eine Wirkung insbesondere im Hinblick auf die Geräuschübertragung nicht erkennbar; ebenso dürfte die Reibung zwischen den aneinander gleitenden Teilen insbesondere bei gebogenem Verlauf des Bowdenzuges noch vergleichsweise groß sein.

Zwar ist es weiterhin aus der FR-A-1 421 347 bekannt, ein Zugelement selbst in Gestalt eines Dreiecks auszubilden, jedoch ist ein Abstand zwischen den so gebildeten Kanten des Zugelementes und der Innenfläche des umhüllenden Mantelelementes zwingend vorgesehen; somit ist eine liniengenaue Führung des Zugelementes innerhalb seiner Ummantelung nicht möglich.

Der Erfindung liegt daher die Aufgabe zugrunde, einen Bowdenzug von einfacher, mit geringem Aufwand produzierbarer Bauweise zu schaffen, der sich durch eine geringe Reibung und Geräuschübertragung sowie durch ein geringes Eigengeräusch und das Fehlen des sog. Totganges auszeichnet.

Die erfindungsgemäße Lösung dieser Aufgabe ergibt sich einschließlich vorteilhafter Ausgestaltungen und Weiterbildungen aus dem Inhalt der Patentansprüche, welche dieser Beschreibung nachgestellt sind.

Mit dem erfindungsgemäßen Bowdenzug sind zahlreiche Vorteile verbunden. Einerseits läßt sich die Umhüllung des Zugelementes wegen ihrer unkomplizierten Form leicht, schnell und mit geringen Mitteln herstellen und mit dem Zugelement verbinden, indem das Zugelement einfach mit der Umhüllung umspritzt wird. Hierzu kann das Zugelement beispielsweise in ein und derselben Fabrikationslinie als solches gefertigt und anschließend in einer Kunststoff-Extrusionsmaschine umhüllt werden. Dabei kommt es in der Regel auf besonders feine Toleranzen nicht an, d. h. die Abmessungen der Umhüllung des Zugelementes brauchen querschnittsmäßig nur so ausgelegt zu werden, daß die Spitzen des Dreiecks die innere Oberfläche des Mantelelementes berühren. Wenn der Bowdenzug in gebogener Form verlegt wird, was bei Bowdenzügen praktisch immer der Fall ist, entfernt sich die an der Außenseite der Biegung befindliche Spitze bzw. Kante der Umhüllung aufgrund deren werkstoffbedingter Elastizität sowieso ein wenig von der betreffenden inneren Oberfläche des Mantelelementes, und diese Erscheinung ist sogar erwünscht, um die Reibung zwischen den beiden gegeneinander beweglichen Teilen des Bowdenzuges herabzusetzen und ihn dadurch leichtgängiger zu machen. Auf ein Zehntel mehr oder weniger kommt es also nicht an. Trotzdem werden sowohl die Übertragung von Fremdgeräuschen als auch das Eigengeräusch bis auf Werte gemindert, welche die menschliche Empfindlichkeit nicht mehr beeinträchtigen, bzw. je nach Verlegung des Bowdenzuges praktisch gleich null sind.

Auch der sog. Totgang, durch den feine Stellbewegungen nachhaltig beeinträchtigt werden können, wird durch die erfindungsgemäße Ausbildung je nach Verlegung des Bowdenzuges entweder gänzlich beseitigt oder auf ein unbedeutend kleines Maß herabgesetzt. Die Ursache hierfür ist die allseitige Führung des Zugelementes im Mantelelement durch die erwähnten Spitzen bzw. Kanten, welche sich — wie die Erprobung gezeigt hat — in einer sich von selbst ergebenden Schlaglänge um die Längsachse des Zugelementes winden. Dabei ist diese Schlaglänge bei Zugelementen in Form von Drahtlitzen in der Regel von der Schlaglänge der Litzendrähte unabhängig.

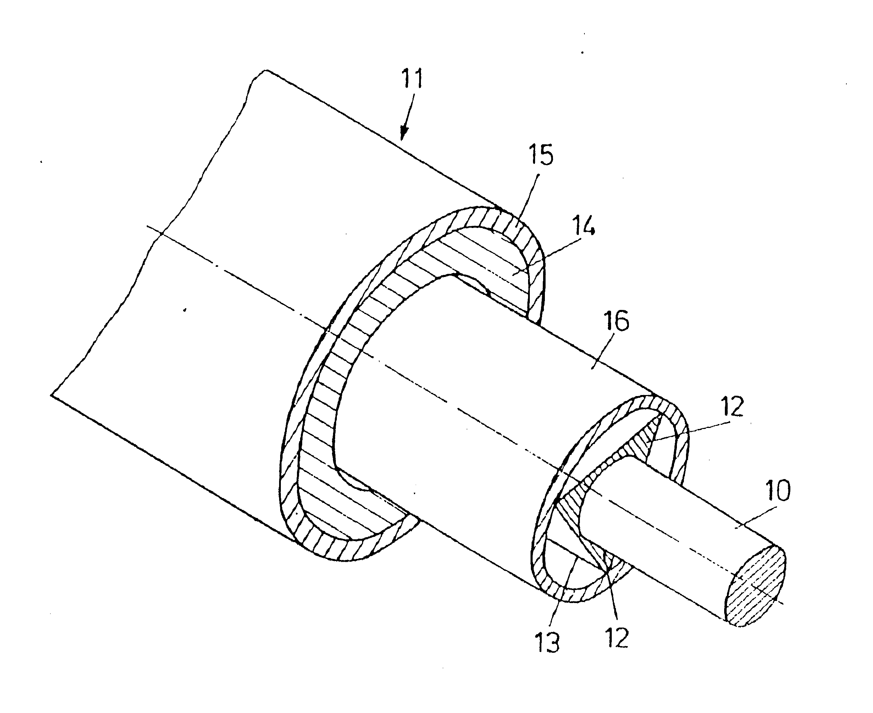

In der Zeichnung ist ein Ausführungsbeispiel der Erfindung wiedergegeben, und zwar zeigt die einzige Abbildung in vereinfachter, schaubildlicher Darstellungsweise einen gestuften Querschnitt durch einen Bowdenzug mit dreieckiger Umhüllung des Zugelementes.

Der abgebildete Bowdenzug ist prinzipiell herkömmlich aufgebaut und besteht aus einem Zugelement 10 und einem Mantelelement 11. Das Zugelement 10 ist vorzugsweise als Stahldrahtlitze aufgebaut und hat eine im Querschnitt gleichseitig dreieckige Umhüllung 12 aus extrudierfähigem Kunststoff, z. B. Polyamid. Die drei Spitzen der dreieckigen Umhüllung 12 ergeben jeweils Längskanten 13, die sich in nicht dargestellter Weise mit verhältnismäßig großer Schlaglänge um das Zugelement 10 winden.

Das Mantelelement 11 setzt sich aus drei konzentrischen Teilen zusammen, nämlich aus einer herkömmlichen Stahl- Flachdrahtspirale 14, einer diese außen nahtlos bedeckenden Kunststoffhülle 15 und einem die Spirale 14 innen auskleidenden Kunststoffschlauch 16, der beispielsweise aus Polyäthylen hergestellt und mit dem einen Ende der Spirale 14 fest verbunden ist.

Der Innendurchmesser des Schlauches 16 einerseits und die Abmessungen der dreieckigen Umhüllung 12 andererseits sind so groß, daß die Kanten 13 der Umhüllung 12 die innere Oberfläche des Schlauches 16 gerade berühren, wenn der Bowdenzug eine im wesentlichen gestreckte Lage einnimmt und keine besonderen Kräften auf ihn ausgeübt werden. Dann läßt sich das Zugelement 10 im Schlauch 16 leicht und wackelfrei in Längsrichtung verschieben. Die Reibung zwischen den beiden Teilen vollzieht sich nur an den drei Linien, wo die Kanten 13 das Innere des Schlauches 16 berühren. Auch wenn die Spitzen des dreieckigen Querschnittes der Umhüllung 12 abgerundet sind, was in der Zeichnung aus Vereinfachungsgründen nicht dargestellt ist, aber schon allein fabrikationsbedingt regelmäßig der Fall ist, verbleibt es bei einer linienförmigen Berührung. Die an die Dreiecksseiten anschließenden langgestreckten Flächen der Umhüllung 12 brauchen nicht völlig eben zu sein, vielmehr können sie sich verwinden und/oder geringfügig konvex oder konkav, in Querrichtung gesehen, verlaufen.

Wenn der Bowdenzug im Bogen verlegt wird, befindet sich der dreieckige Querschnitt der Umhüllung 12 entweder in einer Lage, bei der zwei Spitzen des Dreiecks zum Inneren des Bogens zeigen und eine Dreiecksspitze nach außen oder umgekehrt. Auch Zwischenstellungen sind möglich. Bei Betätigung des Zugelementes 10 mit seiner Umhüllung 12 ergibt sich dann eine zur Innenseite des Bogens wirkende Kraft, die dazu führt, daß sich die nach außen zeigende Kante bzw. die beiden im wesentlichen nach außen zeigenden Kanten ein wenig von der inneren Oberfläche des Schlauches 16 entfernen, so daß die Reibungsbeiwerte nur noch von zwei oder gar einer Kante 13 aufgebracht werden. Dies trägt wesentlich zur Leichtgängigkeit des Bowdenzuges bei. Aufgrund des sich von selbst einstellenden Schlages der Kanten 13 der Umhüllung 12 nehmen trotzdem alle drei Kanten 13 an der Führung des Zugelementes 10 im Schlauch 16 teil, wodurch die eingangs erwähnte Stellhysterese unterbunden wird.

### Patentansprüche

1. Bowdenzug, bestehend im wesentlichen aus Zugelement (10) und vorzugsweise konzentrisch mehrteilig aufgebautem Mantelelement (11), wobei zwischen den gegeneinander längsbeweglich gelagerten Elementen eine mehrfache linienförmige Berührung vorgesehen ist, dadurch gekennzeichnet, daß das Zugelement (10) von einer Umhüllung (12) in der Form eines gleichseitigen Dreiecks eingefaßt ist, dessen nach einem kleinen Radius abgerundete Spitzen an die innere Oberfläche des Mantelelementes (11) heranreichen.

2. Bowdenzug nach Anspruch 1, dadurch gekennzeichnet, daß die Spitzen bzw. Kanten der Ümhüllung (12) des Zugelementes (10) werkstoffbedingt nachgiebig sind.

3. Bowdenzug nach Anspruch 1 oder 2, dadurch gekennzeichnet, daß die Werkstoffe der bei den vorgesehenen Längsbewegungen des umhüllten Zugelementes (10, 12) innerhalb des Mantelelementes (11, 16) einander gleitend berührenden Teile verschieden beschaffen sind.

4. Bowdenzug nach Anspruch 3, dadurch gekennzeichnet, daß die Umhüllung (12) des Zugelementes (10) aus Polyamid und die zur gleitenden Lagerung der Umhüllung bestimmte innere Oberfläche des Mantelelementes (16) aus Polyäthylen bestehen.

### Claims

1. Bowden cable consisting essentially of a tensioning element (10) and a sheathing element (11) which is of a preferably concentric multipart construction, whilst multiple linear contact is provided between the elements which are mounted so as to be longitudinally movable relative to each other, characterised in that the tensioning element (10) is enclosed by a casing (12) in the form of an equilateral triangle, the points of which, being rounded off with a small radius, extend up to the inner surface of the sheathing element (11).

2. Bowden cable as claimed in claim 1, characterised in that the points or edges of the casing (12) of the tensioning element (10) are flexible by the nature of the material used.

3. Bowden cable as claimed in claim 1 or 2, characterised in that the materials of the parts which are in sliding contact with one another during the proposed longitudinal movements of the encased tensioning element (10, 12) within the sheathing element (11, 16) are different in nature from each other.

4. Bowden cable as claimed in claim 3, characterised in that the casing (12) of the tensioning element (10) consists of polyamide and the inner surface of the sheathing element (16), which is intended for sliding support of the casing, consists of polyethylene.

**Revendications**

1. Transmission flexible par câble Bowden, constituée principalement d'un élément transmetteur (10) et d'un élément d'enveloppe (11) réalisé de préférence en plusieurs parties concentriques, un contact linéaire multiple étant prévu entre les éléments montés en déplacement longitudinal relatif, caractérisée en ce que l'élément transmetteur (10) est entouré d'un enrobage (12) en forme de triangle équilatéral, dont les sommets arrondis selon un faible rayon atteignent la surface intérieure de l'élément d'enveloppe (11).

2. Transmission flexible par câble Bowden selon la revendication 1, caractérisée en ce que les sommets ou encore les arêtes de l'enrobage (12) de l'élément transmetteur (10) sont élastiques, du fait de l'élasticité propre au matériau.

3. Transmission flexible par câble Bowden selon la revendication 1 ou 2, caractérisée en ce qu'il est prévu des matériaux différents pour les parties qui, lors des mouvements longitudinaux prévus de l'élément transmetteur enrobé (10, 12) à l'intérieur de l'élément d'enveloppe (11, 16), sont en contact mutuel de glissement.

4. Transmission flexible par câble Bowden selon la revendication 3, caractérisée en ce que l'enrobage (12) de l'élément transmetteur (10) est réalisé en polyamide, et en ce que la surface intérieure de l'élément d'enveloppe (16), qui est destinée au montage glissant de l'enrobage, est réalisée en polyéthylène.